# EUROPÄISCHE PATENTSCHRIFT

(11) **EP 2 565 415 B1**
(45) Veröffentlichungstag und Bekanntmachung des Hinweises auf die Patenterteilung: **11.02.2015**
(21) Anmeldenummer: 12004099.3
(22) Anmeldetag: 26.05.2012
(51) Int. Cl.: F02B 27/00, F02M 35/10, F02M 35/112, F02M 25/07

(54) **Vorrichtung an einer Brennkraftmaschine**
Device for a combustion engine
Dispositif sur un moteur à combustion interne

(30) Priorität: 01.09.2011 DE 102011112187
(43) Veröffentlichungstag der Anmeldung: 06.03.2013
(73) Patentinhaber: MAN Truck & Bus AG, 80995 München (DE)
(72) Erfinder: Tilinski, Marco, 90571 Schwaig b. Nürnberg (DE); Malischewski, Thomas, 90574 Rosstal (DE); Hirschmann, Steffen, 91338 Igensdorf (DE)

(56) Entgegenhaltungen:
- EP-A1- 0 569 714
- DE-A1- 19 741 567
- US-A- 2 080 293

## Beschreibung

Die vorliegende Erfindung betrifft eine Vorrichtung an einer Brennkraftmaschine mit zumindest einem Ladeluftsammelrohr gemäß dem Oberbegriff des Patentanspruchs 1.

Eine Vorrichtung der gattungsgemäßen Art zeigt beispielsweise die US 2, 080, 293, bei der bei einer gemischverdichtenden Reihen-Brennkraftmaschine am Ladeluftsammelrohr bzw. dem entlang der Zylinder verlaufenden Sammelrohr an einer von einer Einmündung der Verbrennungsluft weiter entfernten Stelle eine Rückströmleitung angeschlossen ist, die die angesaugte Verbrennungsluft über eine integrierte Drosselstelle wieder zur Einmündung des Sammelrohres zurückführt (Kurzschlussströmung). Damit soll erreicht werden, dass störende Luftschwingungen aufgrund des Öffnens und Schließens der Gaswechselventile geglättet und der Füllungsgrad insbesondere der weiter von der Einmündung am Sammelrohr entfernten Zylinder der Brennkraftmaschine verbessert wird.

Die Offenlegungsschrift DE 197 41 567 A1 lehrt eine Hubkolben-Brennkraftmaschine mit einer längs zu einer Zylinderreihe verlaufenden Ladeluftleitung zur Versorgung der Brennräume mit Ladeluft. An einem geschlossenen Ende der Ladeluftleitung ist ein ihr Volumen um ein zusätzliches Luftvolumen vergrößernder Raum vorgesehen, um die Luftversorgung zu vergleichmäßigen.

Aufgabe der Erfindung ist es, die gattungsgemäße Vorrichtung mit baulich einfachen Mitteln weiter zu verbessern und an Betriebsbedingungen von Brennkraftmaschinen hoher, spezifischer Leistung anzupassen.

Die Lösung dieser Aufgabe gelingt erfindungsgemäß mit den Merkmalen des Patentanspruchs 1. Vorteilhafte und besonders zweckmäßige Weiterbildungen der Erfindung sind in den Unteransprüchen angeführt.

Erfindungsgemäß wird vorgeschlagen, dass an die Sammelleitung, die auch als Sammelrohr bezeichnet werden kann, zusätzlich zumindest ein Schwingrohr mit einem definierten Resonanzvolumen zur Glättung und/oder Verlagerung definierter bzw. vorgegebener, spezifischer Druckspitzen angeschlossen ist. Es wurde erfindungsgemäß erkannt, dass unter Einsatz dieser weiteren Maßnahme eine verbesserte Abstimmung im Schwingverhalten der Luftströmungen und eine weiter optimierte, gleichmäßigere Befüllung der näher und weiter von der Zuströmung der Verbrennungsluft im Ladeluftsammelrohr entfernten Zylinder erzielbar ist.

Besonders bevorzugt kann dabei das Schwingrohr im Bereich der Abzweigstelle der Rückströmleitung an das Sammelrohr angeschlossen sein, was neben baulichen Vorteilen, zum Beispiel dem Einsparen einer zusätzlichen abzudichtenden Anschlussstelle, auch messbare Verbesserungen in der Befüllung eines oder mehrerer hinsichtlich der Luftverteilung benachteiligter Zylinder, insbesondere zum Beispiel des oder der am weitesten von der Einmündung im Ladeluftsammelrohr entfernten Zylinder(s), ergibt. Es können abhängig von den konstruktiven Gegebenheiten aber auch andere Positionierungen und ggf. die Anordnung von mehreren Schwingrohren angezeigt sein.

Die Brennkraftmaschine weist zur Steuerung einer Abgasrückführung eine stromauf der Einmündung positionierte Drosselstelle auf, an die eine Abgasrückführleitung angeschlossen ist, wobei die Rückströmleitung ebenfalls an diese Drosselstelle angeschlossen ist. Dies vermindert den baulichen Aufwand zur Einstellung einer gezielten Rückströmung der Verbrennungsluft bzw. Glättung der Gasschwingungen und ermöglicht eine günstige Anpassung der Rückströmrate an die jeweils vorliegenden Betriebsbedingungen der Brennkraftmaschine. Dabei kann die Drosselstelle für die Abgasrückführung ein verstellbares Drosselelement (z.B. einen Venturikegel) aufweisen und die Rückführleitung stromab dem Drosselelement an die Drosselstelle angeschlossen sein.

Die Brennkraftmaschine ist mit einem Aufladesystem für die Verbrennungsluft versehen bei dem der Einmündung in das Sammelrohr eine Ladedruckleitung vorgeschaltet sein kann, in der die Drosselstelle für die Abgasrückführung und die Rückströmleitung angeordnet sind. Die Ladedruckleitung kann dabei eine konisch zur Einmündung des Sammelrohres sich erweiternde, rohrförmige Mischerstrecke aufweisen, wobei die Drosselstelle stromauf der Mischerstrecke positioniert ist. Daraus resultiert eine besonders wirksame Kombination von Abgasrückführung und Verbrennungsluftrückführung mit intensiver, homogener Vermischung von Abgas und Verbrennungsluft.

Das Sammelrohr und die Mischerstrecke der Ladedruckleitung sowie eine beide verbindende Zuführleitung und die Rückführleitung können in vorteilhafter Weise in der Draufsicht gesehen im Wesentlichen ein Rechteck und/oder eine Ringleitung ausbilden, wobei zum Beispiel vorgesehen sein könnte, dass das zumindest eine Schwingrohr innerhalb dieser Leitungen verlegt ist. Dies ergibt eine baulich kompakte und konstruktiv vorteilhafte Anordnung, die zudem günstig in einem Motorraum eines Kraftfahrzeugs verbaubar ist. Das Schwingrohr kann jedoch grundsätzlich in jeder anderen geeigneten Position angeordnet werden.

Schließlich kann zumindest in der der Einmündung am nächsten liegenden Einzelleitung des Sammelrohres ein die Luftströmung in das Sammelrohr ablenkendes Abweiselement angeordnet sein, das ein weiteres, konstruktiv einfaches Korrekturelement zur Erzielung eines gleichmäßigen Füllungsgrades aller Zylinder der Brennkraftmaschine und über weite Betriebsbereiche derselben darstellt.

Ein bevorzugtes Ausführungsbeispiel der Erfindung ist im Folgenden mit weiteren Einzelheiten näher beschrieben. Die schematische Zeichnung zeigt grob schematisch und lediglich beispielhaft eine Draufsicht auf das Ladeluftsammelrohr und eine Ladedruckleitung einer aufgeladenen Brennkraftmaschine mit einer beide Leitungen verbindenden Rückströmleitung und einem integriertem Schwingrohr.

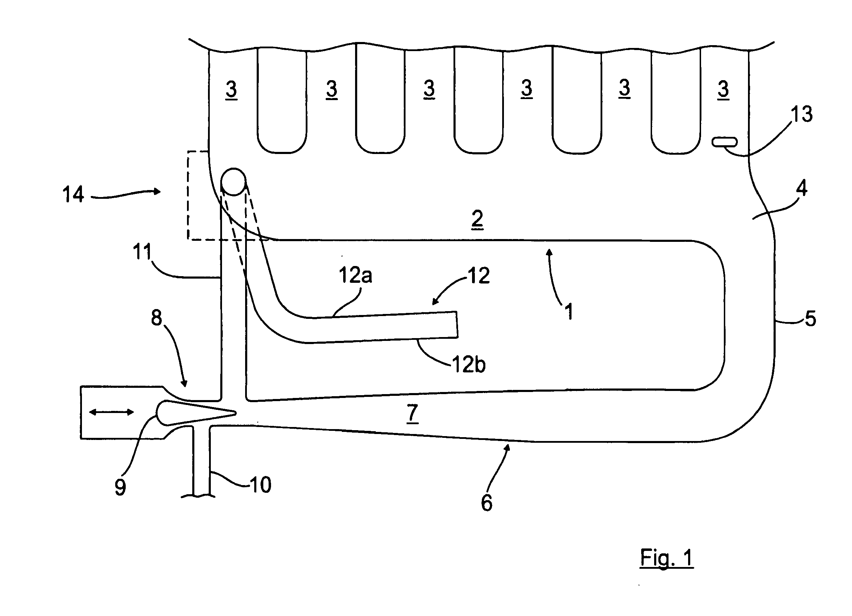

In der beiliegenden Zeichnung ist skizzenhaft ein Ladeluftsammelrohr 1 dargestellt, der an den Zylinderkopf (nicht dargestellt) einer im Dieselverfahren betriebenen Mehrzylinder-Brennkraftmaschine angeflanscht ist.

Das Ladeluftsammelrohr 1 setzt sich im Wesentlichen aus einem geradlinig verlaufenden Sammelrohr 2 und davon abzweigenden Einzelrohren bzw. Einzelleitungen 3 zusammen und weist einerseits eine Einmündung 4 auf, an die über eine Verbindungsleitung 5 eine Ladedruckleitung 6 angeschlossen ist.

Die Einzelleitungen 3 sind in üblicher Weise an durch Gaswechselventile gesteuerte Einlasskanäle im Zylinderkopf der Brennkraftmaschine angeschlossen oder bilden solche Einlasskanäle aus.

Die Verbrennungsluft zu den Brennräumen der Brennkraftmaschine wird über ein Aufladesystem (z.B. einen oder mehrere Abgasturbolader) über die Ladedruckleitung 6 zum Ladeluftsammelrohr 1 gefördert.

In der Ladedruckleitung 6 ist stromauf einer konisch ausgebildeten Mischerstrecke 7 eine Drosselstelle 8 vorgesehen, in der ein Venturikegel 9 axial verschiebbar gelagert ist. Über den Venturikegel 9 kann eine dynamische Druckabsenkung in der Ladedruckleitung 6 gesteuert werden.

An die Drosselstelle 8 ist im Bereich des Venturikegels 9 eine nur angedeutete Abgasrückführungsleitung 10 angeschlossen, über die mittels eines nicht weiter dargestellten Abgasrückführungssystems Abgas in den druckabgesenkten Bereich der Ladedruckleitung 6 rückführbar ist.

An das Sammelrohr 2 des Ladeluftsammelrohrs 1 ist im Bereich der Einzelleitung 3 des am weitesten von der Einmündung 4 entfernten Zylinders der Brennkraftmaschine eine Rückströmleitung 11 angeschlossen, die andererseits im druckabgesenkten Bereich der Drosselstelle 8, 9 stromauf der Mischerstrecke 7 in die Ladedruckleitung 6 mündet.

Über die Rückströmleitung 11 und die Druckabsenkung im Bereich der Drosselstelle 8, 9 wird Verbrennungsluft aus dem Sammelrohr 2 unter Abbau von Gasschwingungen und einer Strömungsvergleichmäßigung abgeführt und der Ladedruckleitung 6 wieder zugeführt, wobei sich die Verbrennungsluft zudem wieder mit dem rückgeführten Abgas homogen vermischen kann.

Das Weiteren ist an der Abzweigung der Rückströmleitung 11 am Sammelrohr 2 ein endseitig geschlossenes Schwingrohr 12 mit einem definierten Resonanzvolumen angeschlossen, das in diesem Bereich auftretende Druckspitzen und Gasschwingungen zusätzlich glättet und/oder verlagert.

Das etwa quer zum Sammelrohr 2 abzweigende Schwingrohr 12 ist - wie aus der einzigen Figur ersichtlich ist hier lediglich beispielhaft mit einer Krümmung 12a versehen und innerhalb des Freiraums der ein Rechteck bildenden Leitungen 2, 11, 6, 5 verlegt, wobei es hier beispielhaft mit seinem Endabschnitt 12b in etwa parallel zum Sammelrohr 2 und der Ladedruckleitung 6 im Bereich der Mischerstrecke 7 verläuft. Grundsätzlich gesehen ist die Lage des wenigstens einen Schwingrohrs frei wählbar, weil letztendlich dessen Länge über dessen Glättungs- bzw. Verlagerungsvermögen entscheidet.

Zumindest in der der Einmündung 4 am nächsten liegenden und ggf. wie dargestellt direkt angeströmten Einzelleitung 3 des Ladeluftsammelrohrs 1 ist ein Abweiselement 13 angeordnet, das einen Teil der einströmenden Verbrennungsluft in das weitere Sammelrohr 2 mit umlenkt, wodurch dieser im vorliegenden Beispielfall im Falle eines fehlenden Abweiselementes 13 sehr gut und damit mit viel Ladeluft versorgte Zylinder "schlechter" gemacht wird und damit zur Vereinheitlichung der Zylinderbefüllung sämtlicher Zylinder mit weniger Ladeluft beaufschlagt wird als dies ohne das Abweiselement 13 der Fall wäre.

Das Abweiselement 13 in Verbindung mit der Funktion der Rückströmleitung 11 und des Schwingrohrs 12 ist dabei so ausgelegt, dass an den Zylindern der Brennkraftmaschine ein möglichst gleicher Füllungsgrad bei niedrigeren und höheren Massendurchsätzen und Betriebszuständen erzielt ist.

Die Erfindung ist nicht auf das dargestellte Ausführungsbeispiel beschränkt.

Das Ladeluftsammelrohr 1 kann ggf. auch so ausgeführt sein, dass - wie mit dem Pfeil 14 angedeutet - die Ladedruckleitung 6 direkt an der in der Bildebene linken Stirnseite (gestrichelt eingezeichnet) des Sammelrohres 2 angeschlossen ist; die Rückströmleitung 11 und das Schwingrohr 12 wären dann gegenüberliegend positioniert und zu der Drosselstelle 8, 9 in der Ladedruckleitung 6 zurückgeführt.

Bei einer mittig an dem Sammelrohr 2 angeordneten Einmündung 4 könnten ggf. auch zwei Rückströmleitungen 11 und zwei Schwingrohre sinngemäß wie vorbeschrieben bzw. im Rahmen der Patentansprüche vorgegeben verwendet sein.

Anstelle der eingezeichneten Position des Schwingrohrs 12 kann auch eine andere Abzweigstelle vom Sammelrohr 2 vorteilhaft sein. Es können ggf. auch zwei oder mehrere Schwingrohre 12 verwendet sein.

Das nur angedeutete Abweiselement 13 in der besagten Einzelleitung 3 des Ladeluftsammelrohrs 1 kann auch gekrümmt oder als Leitwand, ggf. auch im Bereich der Einmündung 4 ausgeführt sein. Alternativ können auch Einschnürungen in der Einzelleitung 3 oder in mehreren Einzelleitungen 3 zum Ausgleich unterschiedlicher Strömungswiderstände verwendet sein.

Weiter kann die Erfindung selbstverständlich für unterschiedlichste Bauarten von Brennkraftmaschinen eingesetzt werden, zum Beispiel für sämtliche vorhandene Zylinderbänke einer Brennkraftmaschine. Zum Beispiel kann die Erfindung in Verbindung mit V-Motoren bzw. V-Brennkraftmaschinen für einen Teil oder bevorzugt für jede der Zylinderbänke eingesetzt werden.

### BEZUGSZEICHENLISTE

- 1: Ladeluftsammelrohr
- 2: Sammelrohr
- 3: Einzelleitungen
- 4: Einmündung
- 5: Verbindungsleitung
- 6: Ladedruckleitung
- 7: Mischerstrecke
- 8: Drosselstelle
- 9: Venturikegel
- 10: Abgasrückführleitung
- 11: Rückströmleitung
- 12: Schwingrohr
- 12a: Krümmung
- 12b: Endabschnitt
- 13: Abweiselement

## Patentansprüche

1. Vorrichtung an einer Brennkraftmaschine mit zumindest einem Sammelrohr mit einer Sammelleitung (2) und abzweigenden Einzelleitungen (3), über die mehrere in Reihe angeordnete Zylinder der Brennkraftmaschine über Gaswechselventile gesteuert mit Verbrennungsluft versorgt werden, wobei die Verbrennungsluft der Sammelleitung (2) an einer einem ersten Zylinder naheliegenden Einmündung (4) zugeführt und auf weitere, entferntere Zylinder verteilt wird und an zumindest einer von der Einmündung (4) entfernten Stelle eine Rückströmleitung an die Sammelleitung (2) angeschlossen ist, die an einer eine Druckabsenkung bewirkenden Drosselstelle (8, 9) wieder mit der Einmündung oder stromauf zu dieser mit der Sammelleitung (2) verbunden ist, **dadurch gekennzeichnet, dass**
• das Sammelrohr als Ladeluftsammelrohr (1) ausgebildet ist,
• an die Sammelleitung (2) zusätzlich zumindest ein Schwingrohr (12) mit einem definierten Resonanzvolumen zur Glättung und/oder zur Verlagerung spezifischer Schwingungen und/oder Druckspitzen der Verbrennungsluft angeschlossen ist wobei
• die Brennkraftmaschine zur Steuerung einer Abgasrückführung eine stromauf der Einmündung (4) positionierte Drosselstelle (8, 9) aufweist, an die eine Abgasrückführleitung (10) angeschlossen ist und dass die Rückströmleitung (11) ebenfalls an diese Drosselstelle (8, 9) angeschlossen ist.

2. Vorrichtung nach Anspruch 1, **dadurch gekennzeichnet, dass** das Schwingrohr (12) im Bereich der Abzweigstelle der Rückströmleitung (11) an die Sammelleitung (2) angeschlossen ist.

3. Vorrichtung nach Anspruch 2, **dadurch gekennzeichnet, dass** die Drosselstelle (8) für die Abgasrückführung ein verstellbares Drosselelement (9) aufweist und dass die Rückführleitung (11) stromab dem Drosselelement (9) an die Drosselstelle (8) angeschlossen ist.

4. Vorrichtung nach einem der vorhergehenden Ansprüche, **dadurch gekennzeichnet, dass** die Brennkraftmaschine mit einem Aufladesystem für die Verbrennungsluft versehen ist bei dem der Einmündung (4) in die Sammelleitung (2) eine Ladedruckleitung (6) vorgeschaltet ist, in der die Drosselstelle (8, 9) für die Abgasrückführleitung (10) und die Rückströmleitung (11) angeordnet ist.

5. Vorrichtung nach Anspruch 4, **dadurch gekennzeichnet, dass** die Ladedruckleitung (6) eine konisch zur Einmündung der Sammelleitung (4) sich erweiternde Mischerstrecke (7) aufweist.

6. Vorrichtung nach Anspruch 4 oder 5, **dadurch gekennzeichnet, dass** die Drosselstelle (8, 9) stromauf der Mischerstrecke (7) positioniert ist.

7. Vorrichtung nach einem der vorhergehenden Ansprüche, **dadurch gekennzeichnet, dass** die Sammelleitung (2) und die Mischerstrecke (7) der Ladedruckleitung (6) sowie eine an beide anschließende Verbindungsleitung (5) mitsamt der Rückströmleitung (11) in der Draufsicht gesehen rechteckförmig und/oder als Ringleitung ausgebildet sind.

8. Vorrichtung nach Anspruch 7, **dadurch gekennzeichnet, dass** das zumindest eine Schwingrohr (12) innerhalb des Freiraums dieser Leitungen (2, 5, 6, 11) verlegt ist.

9. Vorrichtung nach einem der vorhergehenden Ansprüche, **dadurch gekennzeichnet, dass** zumindest in der der Einmündung (4) am nächsten liegenden Einzelleitung (3) des Ladeluftsammelrohrs (1) ein die Luftströmung in die Sammelleitung (2) ablenkendes Abweiselement (13) angeordnet ist.

## Claims

1. Device on an internal combustion engine, having at least one manifold with a header line (2) and individual lines (3) branching, off, via which a plurality of cylinders of the internal combustion engine, which are arranged in series, are supplied with combustion air in a manner controlled by gas exchange valves, wherein the combustion air is fed to the header line (2) at an inlet (4) situated close to a first cylinder, and is distributed to additional cylinders, situated further away, and a return line is connected to the header line (2) at at least one point remote from the inlet (4), said return line being connected once again to the inlet or, upstream of the latter, to the header line (2) at a restriction (8, 9), which causes a pressure drop, **characterized in that**
• the manifold is designed as a charge air manifold (1),
• in addition, at least one vibration tube (12) having a defined resonance volume for smoothing and/or displacing specific vibrations and/or pressure peaks of the combustion air is connected to the header line (2), wherein
• for controlling an exhaust gas recirculation system, the internal combustion engine has a restriction (8, 9) which is positioned upstream of the inlet (4) and to which an exhaust gas recirculation line (10) is connected, and **in that** the return line (11) is likewise connected to said restriction (8, 9).

2. Device according to Claim 1, **characterized in that** the vibration tube (12) is connected to the header line (2) in the region of the branch point of the return line (11).

3. Device according to Claim 2, **characterized in that** the restriction (8) for the exhaust gas recirculation system has an adjustable throttling element (9), and **in that** the return line (11) is connected to the restriction (8) downstream of the throttling element (9).

4. Device according to one of the preceding claims, **characterized in that** the internal combustion engine is provided with a pressure charging system for the combustion air, in which a charge pressure line (6), in which the restriction (8, 9) for the exhaust gas recirculation line (10) and the return line (11) is arranged, is located ahead of the inlet (4) into the header line (2).

5. Device according to Claim 4, **characterized in that** the charge pressure line (6) has a mixer section (7), which widens conically toward the inlet of the header line (2).

6. Device according to Claim 4 or 5, **characterized in that** the restriction (8, 9) is positioned upstream of the mixer section (7).

7. Device according to one of the preceding claims, **characterized in that** the header line (2), the mixer section (7) of the charge air line (6), and a connecting line (5) connected to both, together with the return line (11), are of rectangular design and/or are designed as a ring line in plan view.

8. Device according to Claim 7, **characterized in that** the at least one vibration tube (12) is located within the free space between said lines (2, 5, 6, 11).

9. Device according to one of the preceding claims, **characterized in that** a deflection element (13), which deflects the air flow into the header line (2), is arranged at least in the closest individual line (3) of the charge air manifold (1) to the inlet (4).

## Revendications

1. Dispositif sur un moteur à combustion interne comprenant au moins un collecteur avec une conduite collectrice (2) et des conduites individuelles (3) en dérivation, par le biais desquelles plusieurs cylindres, disposés en série, du moteur à combustion interne sont alimentés en air de combustion de manière commandée par le biais de soupapes d'échange de gaz, l'air de combustion étant acheminé jusqu'à la conduite collectrice (2) au niveau d'une embouchure (4) proche d'un premier cylindre et étant distribué à d'autres cylindres plus éloignés, et une conduite de retour étant raccordée à la conduite collectrice (2) en au moins un point éloigné de l'embouchure (4), laquelle conduite de retour est à nouveau reliée à l'embouchure ou, en amont de celle-ci, à la conduite collectrice (2) en un point d'étranglement (8, 9) provoquant une baisse de pression, **caractérisé en ce que**
- le collecteur est réalisé sous forme de collecteur d'air de suralimentation (1),
- au moins un tuyau à résonance (12) présentant un volume de résonance défini est en outre raccordé à la conduite collectrice (2) pour lisser et/ou pour déplacer des vibrations spécifiques et/ou des pointes de pression de l'air de combustion,
- le moteur à combustion interne comprenant, pour réguler une recirculation des gaz d'échappement, un point d'étranglement (8, 9) positionné en amont de l'embouchure (4), auquel point d'étranglement est raccordée une conduite de recirculation des gaz d'échappement (10), et **en ce que** la conduite de retour (11) est également raccordée à ce point d'étranglement (8, 9).

2. Dispositif selon la revendication 1, **caractérisé en ce que** le tuyau à résonance (12) est raccordé à la conduite collectrice (2) dans la région du point de dérivation de la conduite de retour (11).

3. Dispositif selon la revendication 2, **caractérisé en ce que** le point d'étranglement (8) pour la recirculation des gaz d'échappement comprend un élément d'étranglement réglable (9), et **en ce que** la conduite de retour (11) est raccordée au point d'étranglement (8) en aval de l'élément d'étranglement (9).

4. Dispositif selon l'une quelconque des revendications précédentes, **caractérisé en ce que** le moteur à combustion interne est pourvu d'un système de suralimentation pour l'air de combustion, dans lequel système de suralimentation une conduite de pression de suralimentation (6) est placée en amont de l'embouchure (4) dans la conduite collectrice (2), dans laquelle conduite de pression de suralimentation est disposé le point d'étranglement (8, 9) pour la conduite de recirculation des gaz d'échappement (10) et la conduite de retour (11).

5. Dispositif selon la revendication 4, **caractérisé en ce que** la conduite de pression de suralimentation (6) comprend une section de mélange (7) s'élargissant de manière conique en direction de l'embouchure de la conduite collectrice (2).

6. Dispositif selon la revendication 4 ou 5, **caractérisé en ce que** le point d'étranglement (8, 9) est positionné en amont de la section de mélange (7).

7. Dispositif selon l'une quelconque des revendications précédentes, **caractérisé en ce que** la conduite collectrice (2) et la section de mélange (7) de la conduite de pression de suralimentation (6), ainsi qu'une conduite de liaison (5) se raccordant aux deux, y compris la conduite de retour (11), sont réalisées sous forme rectangulaire et/ou sous forme de conduite annulaire en vue de dessus.

8. Dispositif selon la revendication 7, **caractérisé en ce qu'**au moins un tuyau à résonance (12) est placé à l'intérieur de l'espace libre entre ces conduites (2, 5, 6, 11).

9. Dispositif selon l'une quelconque des revendications précédentes, **caractérisé en ce qu'**un élément déflecteur (13) déviant le flux d'air dans la conduite collectrice (2) est disposé au moins dans la conduite individuelle (3) du collecteur d'air de suralimentation (1) située le plus près de l'embouchure (4).
